# EUROPÄISCHE PATENTANMELDUNG

(11) **EP 0 724 014 A2**
(43) Veröffentlichungstag der Anmeldung: **31.07.1996**
(21) Anmeldenummer: 96100972.7
(22) Anmeldetag: 24.01.1996
(51) Int. Cl.: C12C 13/00

(54) **Verfahren und Anlage zur Brauwasserkühlung**

(30) Priorität: 25.01.1995 DE 19502263
(71) Anmelder: Lenz, Bernhard, D-97318 Kitzingen (DE)
(72) Erfinder: Lenz, Bernhard, D-97318 Kitzingen (DE); Felgentraeger, Wolfgang, Dr., D-97353 Wiesentheid (DE)
(74) Vertreter: Böck, Bernhard, Dipl.-Ing.

(57) **Zusammenfassung**

Die Erfindung betrifft eine Anlage und ein Verfahren zur Brauwasservorkühlung unter Verwendung einer Kälteanlage, wobei die Kälteanlage als Absorptionskälteanlage, vorzugsweise als LiBr-Absorptionskälteanlage, mit Verdampfer, Absorber, Generator und Kondensator ausgeführt ist und der Generator mit überschüssiger in der Brauerei anfallender Prozesswärme betrieben wird. Vorzugsweise findet die im Pfannendunsdtkondensator wiedergewonnene Brüdenwärme Verwendung, die in einem Energiespeicher zwischengespeichert werden kann.

## Beschreibung

Die Erfindung betrifft ein Verfahren und eine Anlage zur Brauwasservorkühlung unter Verwendung einer Kälteanlage.

Die beim Brauprozess gewonnene Bierwürze wird nach der Kochung in der Würzepfanne von einer Temperatur von bis zu 100° C und mehr vor der Leitung in den oder die Gärbehälter auf die sogenannte Anstelltemperatur abgekühlt. Diese liegt in Abhängigkeit vom gewünschten Gärverfahren im Regelfall zwischen 4°C (untergärige Biere) und 18°C (obergärige Biere). Generell ist in jüngster Zeit bei vielen Brauereien ein Anstieg der Gärtemperatur und damit verbunden auch der Anstelltemperatur zu beobachten, um den Gärprozess zu beschleunigen. Zur Abkühlung der Würze auf die Anstelltemperatur verwendet man üblicherweise kaltes Brauwasser, das sich dabei auf ca. 80 °C erwärmt.

Aus dem Stand der Technik ist eine zwei- oder mehrstufige Würzekühlung bekannt. Dabei wird in einem entsprechend dimensionierten Kühler in einer ersten Stufe mit kaltem Brauwasser im Bereich zwischen ca. 10 und 30°C die aus der Würzepfanne kommende Würze auf eine Temperatur gekühlt, die ca. 3 bis 6°C über der Brauwassereintrittstemperatur liegt. Anschließend erfolgt in einer zweiten Stufe die weitere Abkühlung der Würze auf die gewünschte Anstelltemperatur über ein entsprechendes Kälteträgermedium, das in einer zentralen Kälteanlage, in der Regel eine Kompressionskälteanlage, auf die entsprechend unterhalb der Anstelltemperatur liegende Arbeitstemperatur gekühlt worden ist. Nachteilig bei diesem bekannten Kühlverfahren ist insbesondere, daß die Energiekosten für die elektrische Antriebsenergie zum Betrieb der Kompressionskälteanlage beträchtlich sind, wobei zudem noch diese Antriebsenergie innerhalb des relativ kurzen Zeitraums der würzekühlung, in der Regel 45 bis 60 Minuten, zur Verfügung stehen muß.

Es ist weiter eine einstufige Würzekühlung bekannt, bei der während der gesamten Suddauer, in der Regel 3 bis 4 Stunden, das Brauwasser mit der Kompressionskälteanlage kontinuierlich auf eine Temperatur von ca. 2 bis 4°C unter der Anstelltemperatur gekühlt wird. Das so vorgekühlte Brauwasser wird dann bis zur Würzekühlung in einem sogenannten Eiswassertank zwischengespeichert. Auch wenn bei diesem bekannten Verfahren kostenintensive Energiespitzen reduziert werden, ist dennoch ein nicht unbeträchtlicher Energieeinsatz für den Betrieb der Kompressionskälteanlage notwendig.

Ausgehend von diesem Stand der Technik ist es die Aufgabe der vorliegenden Erfindung, ein Verfahren und eine Anlage zur Brauwasservorkühlung zu schaffen, die den Einsatz zusätzlicher Energie, insbesondere elektrischer Antriebsenergie, verringern und die Wirtschaftlichkeit erhöhen.

Diese Aufgabe wird durch ein Verfahren nach der Lehre des Patentanspruchs 1 bzw. durch eine Anlage nach der Lehre des Patentanspruchs 9 gelöst.

Vorteilhafte Ausgestaltungen der Erfindung sind Gegenstand der Unteransprüche.

Der Erfindung liegt zunächst einmal die Erkenntnis zu Grunde, daß in vielen Brauereien Prozesswärme im Überschuß produziert wird. Diese Prozesswärme kann dabei beispielsweise als Abwärme eines Blockheizkraftwerkes, sei diese nun an Heißwasser oder Wasserdampf als Trägermedium gebunden, vorliegen. Ein hoher Anteil an überschüssiger Prozesswärme fällt bei vielen Brauereien beim Kochen der Würze an. Dabei wird jedoch bereits regelmäßig die in den Brüden enthaltene Wärme im Pfannendunstkondensator zumindest teilweise wiedergewonnen und vor allem zur regenerativen Würzevorwärmung verwendet. In Abhängigkeit vom verwendeten Kochverfahren fallen jedoch häufig mehr Brüden und damit überschüssige wiedergewinnbare Prozesswärme an, als zur Würzevorwärmung Verwendung finden kann.

Es ist nun die wesentliche Idee der vorliegenden Erfindung, an Stelle der bisher im Brauereibereich zur Anwendung kommenden Kompressionskälteanlagen, die einen erheblichen Stromverbrauch aufweisen, eine Absorptionskälteanlage mit Verdampfer, Absorber, Generator und Kondensator zu verwenden und den Generator der Absorptionskälteanlage, in dem das Kältemittel verdampft, d.h. auf ein höheres Temperatur-Druck-Niveau gebracht wird, mit überschüssiger in der Brauerei anfallender Prozesswärme zu betreiben.

Grundsätzlich ist in Abhängigkeit von den Temperaturen des zur Verfügung stehenden Brauwassers und der gewünschten Anstelltemperatur der Würze, die eine Brauwassertemperatur bedingt, die ca. 2 bis 5°C unterhalb dieser Anstelltemperatur liegt, die Wahl des Arbeitsstoffpaares Kältemittel/Absorbens beliebig. So kann beispielsweise das Arbeitsstoffpaar Ammoniak/Wasser (NH₃/H₂O), wobei Ammoniak als Kältemittel und Wasser als Absorbens dient, Verwendung finden. Insbesondere im Hinblick auf die zur Kühlung von Brauwasser mit einer Ausgangstemperatur zwischen ca. 10 und 30°C und einer Anstelltemperatur größer als 6°C notwendige Kühlleistung und das aus dem Pfannendunstkondensator zur Verfügung stehende Heißwasser von in der Regel zwischen 95 und 105°C kann vorzugsweise als Kältemittel in der Absorptionskälteanlage Wasser und als Absorbens ein hygroskopisches Material, insbesondere ein Salz Verwendung finden.

Gemäß einem besonders bevorzugten Ausführungsbeispiel ist das Salz ein Lithium-Bromid-Salz (LiBr). Eine Absorptionskälteanlage mit dem Arbeitsstoffpaar Wasser/Lithium-Bromid (H₂O/LiBr) ist aus der Klimatechnik bekannt. Mit einer derartigen Absorptionskälteanlage ist eine Abkühlung des Brauwassers mit einer Ausgangstemperatur zwischen 10 und 30°C auf unter 5°C problemlos möglich.

Gemäß einem Ausführungsbeispiel wird die im Absorber anfallende Lösungswärme und die im Kondensator anfallende Kondensationswärme des Kältemittels über einen separaten Kühlmittelkreislauf abgeführt. Es handelt sich dabei vorzugsweise um einen getrennten Kühlwasserkreislauf, wobei das im Absorber und Kondensator erwärmte Kühlwasser anschließend einer separaten Kühleinrichtung, beispielsweise einem bekannten Kühlturm, zur Abkühlung zugeführt wird.

Nach einem weiteren Ausführungsbeispiel der Erfindung werden die im Absorber erhaltene verdünnte Sole und die im Generator durch Verdampfung des Kältemittels erhaltene konzentrierte Sole, vorzugsweise im Gegenstrom, durch einen Wärmetauscher geführt, wobei ein Teil der in der konzentrierten Sole enthaltenen Wärme auf die verdünnte Sole diese vorwärmend und dadurch den Wirkungsgrad insbesondere des Generators erhöhend übertragen wird.

Wenngleich grundsätzlich wie vorstehend beschrieben, jede Art von überschüssiger in der Brauerei anfallender Prozesswärme zum Betrieb des Generators der Absorptionskälteanlage Verwendung finden kann, wird erfindungsgemäß vorzugsweise jedoch als Prozesswärme Heisswasser aus dem Pfannendunstkondensator einer Würzepfanne verwendet.

Dabei ist grundsätzlich die direkte Abnahme des Heisswassers aus dem Pfannendunstkondensator in den Generator der Absorptionskälteanlage möglich; gemäß einem besonders bevorzugten Ausführungsbeispiel jedoch wird das aus dem Pfannendunstkondensator kommende Heisswasser vor der Verwendung in der Absorptionskälteanlage in einem Energiespeicher zwischengespeichert. Dieser Energiespeicher ist dabei vorzugsweise als Schichtspeicher ausgebildet.

Eine besonders bevorzugte Anlage zur Brauwasservorkühlung mit einer Kälteanlage weist erfindungsgemäß mindestens einen Pfannendunstkondensator, in dem die in der Würzepfanne beim Würzekochen entstehenden Brüden unter Abgabe der ihnen innewohnenden Kondensationswärme an ein Wärmeträgermedium, insbesondere Wasser, kondensiert werden, und eine Absorptionskälteanlage mit Verdampfer, Absorber, Generator und Kondensator auf, wobei Pfannendunstkondensator und der Generator der Absorptionskälteanlage mittelbar oder unmittelbar derart gekoppelt sind, daß das im Pfannendunstkondensator erwärmte Wärmeträgermedium zum Austreiben des Kältemitteldampfes im Generator verwendet wird.

Gemäß einer besonders bevorzugten Ausgestaltung weist die Anlage einen zwischen Pfannendunstkondensator und Generator angeordneten Energiespeicher zur Zwischenspeicherung des im Pfannendunstkondensator erwärmten und/oder des nach Durchlaufen des Generators abgekühlten Wärmeträgermediums auf. Dadurch kann in einfacher und vorteilhafter Weise eine Pufferung des Energiebedarfs des Generators der Absorptionskälteanlage erfolgen.

Im folgenden ist die Erfindung anhand einer lediglich ein Ausführungsbeispiel darstellenden Zeichnung näher erläutert. Es zeigt die einzige
- **Fig**.: in schematischer blockdiagrammartiger Darstellung eine erfindungsgemäße Anlage zur Durchführung des erfindungsgemäßen Verfahrens.

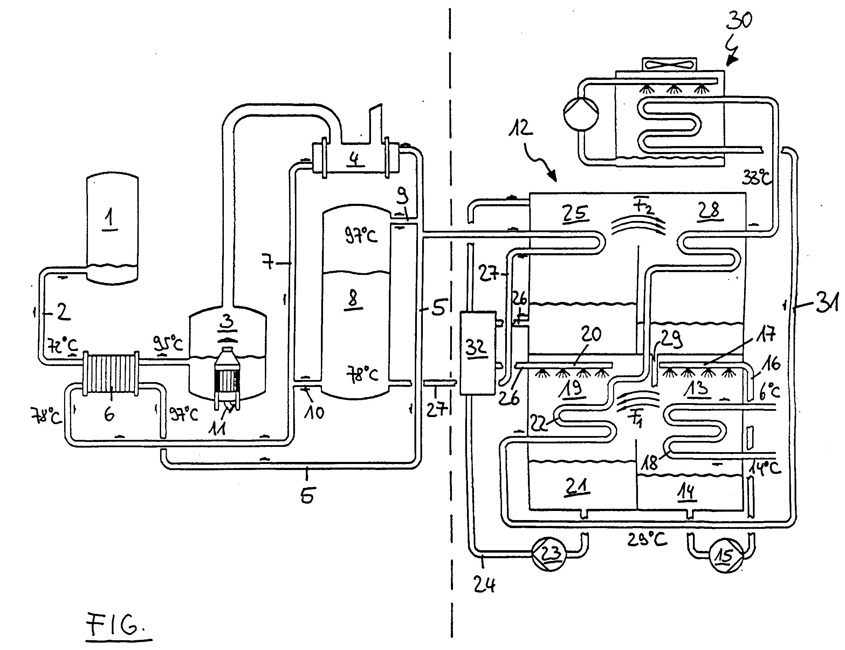

In der linken Hälfte der Darstellung nach der Figur ist lediglich schematisch ein Sudhausbereich einer Brauerei dargestellt. Aus einem Würzevorlauftank 1 wird über eine Rohrleitung 2 vorgewärmte Würze in die Würzepfanne 3 geleitet und dort gekocht. Die Kochtemperatur der Würze in der Würzepfanne liegt dabei in Abhängigkeit vom gewählten Kochverfahren, insbesondere den dabei herrschenden Druckverhältnissen, bis zu 100°C und darüber. Dabei wird ein erheblicher Anteil des in der Würze befindlichen Wassers verdampft. Die Verdampfung kann dabei, wiederum im Abhänigigkeit vom verwendeten Kochverfahren, ca. 5 bis 15 %/hl Ausschlagwürze (AW) betragen. Diese Brüden werden einem Pfannendunstkondensator 4 zugeführt, in dem durch Kondensation der Brüden ein erheblicher Anteil der in diesen Brüden enthaltenen Abwärme durch Wärmeaustausch bzw. Wärmeabgabe an sich dabei erhitzendes Wasser wiedergewonnen werden kann. Im vorliegenden Beispiel wird im Pfannendunstkondensator 4 Wasser auf ca. 97°C erhitzt und über die Rohrleitung 5 einem als Wärmetauscher ausgebildeten Würzeerhitzer 6 zugeführt. Im Würzeerhitzer 6 wird dabei im Gegenstrom zur aus dem Würzevorlauftank kommenden Würze diese auf ca. 95°C erhitzt, wobei sich das 97grädige Wasser auf ca. 78°C abkühlt und über die Rohrleitung 7 dem Pfannendunstkondensator 4 zur erneuten Erhitzung zugeführt wird.

Zur Speicherung der im wesentlichen über die gesamte Suddauer anfallenden Brüdenkondensatabwärme ist gemäß dem vorliegenden Ausführungsbeispiel ein als Schichtspeichertank ausgeführter Energiespeicher 8 vorgesehen. Dabei wird das 97grädige Wasser über die Rohrleitung 9 in den Energiespeicher 8 eingeleitet bzw. bei Bedarf wieder entnommen. Das aus dem Würzeerhitzer 6 kommende 78grädige Wasser kann über die Rohrleitung 10 ebenfalls im Energiespeicher 8 zwischengespeichert werden, wobei über die gleiche Rohrleitung 10 das im unteren Teil des als Schichtspeicher ausgeführten Energiespeichers 8 befindliche 78grädige Wasser über die Rohrleitung 7 dem Pfannendunstkondensator 4 zur erneuten Erhitzung zugeführt werden kann.

Nach Beendigung des Kochvorganges wird die in der Würzepfanne 3 befindliche Würze über einen Ablaßstutzen 11 abgezogen und nach Abkühlung auf die gewünschte Anstelltemperatur einem nicht dargestellten Gärbehälter zugeführt. Die Abkühlung auf die Anstelltemperatur erfolgt beim hier dargestellten Ausführungsbeispiel einstufig mittels entsprechend aufbereitetem Brauwasser, das auf eine Temperatur gekühlt wird, die ca. 2 bis 4°C unterhalb der gewünschten Anstelltemperatur liegt. Die Abkühlung des Brauwassers erfolgt dabei in der in der rechten Hälfte der Figur dargestellten Absorptionskälteanlage (AKA) 12. Bei der gemäß dem vorliegenden Ausführungsbeispiel dargestellten Absorptionskälteanlage 12 handelt es sich um eine aus der Klimatechnik bekannte H₂O/LiBr-Absorptionskältemaschine, in der Wasser als Kältemittel und das Salz Lithium-Bromid als Absorbens eingesetzt wird. Die Absorptionskälteanlage 12 weist in an sich bekannter Weise vier Stationen auf, die in getrennten Kammern angeordnet sind.

Im Verdampfer 13, der in der unteren, rechten Kammer angeordnet ist, wird das als Kältemittel wirkende Wasser 14 mittels einer Kältemittelpumpe 15, die das Wasser 14 über eine Rohrleitung 16 in den oberen Teil der Kammer führt, über ein Düsensystem 17 versprüht. Aufgrund des niedrigen im Verdampfer herrschenden Druckes von ca. 8 mbar verdampft das Wasser 14 dabei bei niedrigen Temperaturen und kühlt dabei das mit ca. 14°C zugeführte und in einer entsprechenden Leitung 18 durch den Verdampfer geführte Brauwasser auf ca. 6°C ab.

Der Kältemitteldampf, d.h. der Wasserdampf, gelangt anschließend, wie dies durch die Pfeile F₁ angedeutet ist, in die untere linke Kammer, in der der Absorber 19 angeordnet ist. Im Absorber 19 wird über ein Sprühdüsensystem 20 eine relativ hoch konzentrierte Sole, d.h. beim dargestellten Ausführungsbeispiel eine hoch konzentrierte Lithium-Bromid-Lösung versprüht, die stark hygroskopisch wirkt. Aufgrund dieser hygroskopischen Eigenschaft wird im Absorber 19 der vom Verdampfer 13 kommende Wasserdampf unter Bildung einer verdünnten Lithium-Bromid-Sole, die sich am Boden des Absorbers 19 sammelt, absorbiert. Die dabei frei werdende Lösungswärme wird nach Wärmetausch über eine Kühlwasserleitung 22 abgeführt.

Die verdünnte Lithium-Bromid-Sole wird mittels einer Solepumpe 23 über eine Rohrleitung 24 in die linke obere Kammer der Absorptionskälteanlage 12 geführt, in der der Generator 25 ausgebildet ist. Dabei wird im Generator 25 die aufgrund des absorbierten Wasserdampfes verdünnte Lithium-Bromid-Sole "ausgekocht". Dies bedeutet mit anderen Worten, daß im Generator 25 unter Zuführung von 97grädigem Heißwasser aus dem Pfannendunstkondensator 4 bzw. dem Energiespeicher 8 das im Absorbens enthaltene Wasser erneut verdampft wird, wobei sich im unteren Bereich des Generators 25 die dadurch stark konzentrierte Sole sammelt und über die Rohrleitung 26 wieder an den Absorber 19 zurückgeleitet wird. Bei diesem "Auskochen" des Wasserdampfs aus der verdünnten Sole reduziert sich die Temperatur des aus dem Pfannendunstkondensator 4 bzw. dem Energiespeicher 8 kommenden Heißwassers gemäß dem vorliegenden Ausführungsbeispiel auf ca. 78° wobei das solchermaßen abgekühlte Wasser über die Rohrleitung 27 an den Energiespeicher 8 zurückgeführt wird.

Der im Generator 25 ausgetriebene Wasserdampf gelangt, wie dies durch die Pfeile F₂ schematisch dargestellt ist, in den Kondensator 28 oder Verflüssiger und wird dort unter Wärmeabgabe kondensiert. Die Abfuhr der frei gewordenen Kondensationswärme erfolgt beim dargestellten Ausführungsbeispiel über die aus dem Absorber 19 kommende Kühlwasserleitung 22. Das kondensierte Wasser sammelt sich am Boden des Kondensators 28 und wird über eine Leitung 29 wiederum dem Verdampfer 13 zugeführt. Damit ist der Kältemittelkreislauf geschlossen.

Das in der Kühlwasserleitung 22 zirkulierende Kühlwasser wird nach dem Verlassen des Kondensators 28 einer separaten Kühleinrichtung, beispielsweise einem herkömmlichen Kühlturm 30 zugeführt und dort beim vorliegenden Ausführungsbeispiel von ca. 33°C auf ca. 29°C abgekühlt. Anschließend wird das Kühlwasser über die Rohrleitung 31 wiederum dem Absorber 19 zugeführt.

Zur Verbesserung des Wirkungsgrades der Absorptionskälteanlage 12 ist in der Rohrleitung 24, in der die verdünnte Sole vom Absorber 19 zum Generator 25 gepumpt wird, ein Wärmetauscher 32 angeordnet, in dem unter Wärmeabgabe die durch das aus dem Pfannendunstkondensator 4 bzw. dem Energiespeicher 8 kommende Heißwasser erwärmte konzentrierte Sole im Gegenstrom zur verdünnten Sole mit niedriger Temperatur geführt wird. Dabei wird die konzentrierte Sole abgekühlt, während sich gleichzeitig die verdünnte Sole erwärmt. Die im Wärmetauscher 32 nicht an die verdünnte Sole übertragbare Überschußwärme der konzentrierten Sole wird im Absorber 19 ebenfalls durch die Kühlwasserleitung 22 zumindest teilweise abgeführt.

## Patentansprüche

1. Verfahren zur Brauwasservorkühlung unter Verwendung einer Kälteanlage,
dadurch **gekennzeichnet**,
daß die Kälteanlage eine Absorptionskälteanlage (12) mit Verdampfer (13), Absorber (19), Generator (25) und Kondensator (28) ist und daß der Generator (25) mit überschüssiger in der Brauerei anfallender Prozesswärme betrieben wird.

2. Verfahren nach Anspruch 1,
dadurch **gekennzeichnet**,
daß als Kältemittel in der Absorptionskälteanlage (12) Wasser und als Absorbens ein hygroskopisches Material, insbesondere ein Salz verwendet wird.

3. Verfahren nach Anspruch 3,
dadurch **gekennzeichnet**,
daß das Salz ein Lithium-Bromid-Salz ist.

4. Verfahren nach einem der Ansprüche 1 bis 3,
dadurch **gekennzeichnet**,
daß die im Absorber (19) anfallende Lösungswärme und die im Kondensator (28) anfallende Kondensationswärme über einen separaten Kühlmittelkreislauf (22) abgeführt werden.

5. Verfahren nach einem der Ansprüche 1 bis 4,
dadurch **gekennzeichnet**,
daß die im Absorber (19) erhaltene verdünnte Sole und die im Generator (25) erhaltene konzentrierte Sole im Gegenstrom durch einen Wärmetauscher (32) geführt werden, wobei ein Teil der in der konzentrierten Sole enthaltenen Wärme auf die verdünnte Sole übertragen wird.

6. Verfahren nach einem der Ansprüche 1 bis 5,
dadurch **gekennzeichnet**,
daß als Prozesswärme Heisswasser aus dem Pfannendunstkondensator (4) einer Würzepfanne (3) verwendet wird.

7. Verfahren nach Anspruch 6,
dadurch **gekennzeichnet**,
daß das Heisswasser vor der Verwendung in der Absorptionskälteanlage (12) in einem Energiespeicher (8) zwischengespeichert wird.

8. Verfahren nach einem der Ansprüche 1 bis 5,
dadurch **gekennzeichnet**,
daß als Prozesswärme die Abwärme eines Blockheizkraftwerkes verwendet wird.

9. Anlage zur Brauwasservorkühlung mit einer Kälteanlage,
**gekennzeichnet** durch
mindestens einen Pfannendunstkondensator (4), in dem die in einer Würzepfanne (3) beim Würzekochen entstehenden Brüden unter Abgabe der ihnen innewohnenden Kondensationswärme an ein Wärmeträgermedium, insbesondere Wasser, kondensiert werden, und eine Absorptionskälteanlage (12) mit Verdampfer (13), Absorber (19), Generator (25) und Kondensator (28), wobei Pfannendunstkondensator (4) und der Generator (25) der Absorptionskälteanlage (12) mittelbar oder unmittelbar derart gekoppelt sind, daß das im Pfannendunstkondensator (4) erwärmte Wärmeträgermedium zum Austreiben des Kältemitteldampfes im Generator (25) verwendet wird.

10. Anlage nach Anspruch 9,
**gekennzeichnet** durch
einen zwischen Pfannendunstkondensator (4) und Generator (25) angeordneten Energiespeicher (8) zur Zwischenspeicherung des im Pfannendunstkondensator (4) erwärmten und/oder des nach Durchlaufen des Generators (25) abgekühlten Wärmeträgermediums.
